# EUROPÄISCHE PATENTANMELDUNG

(11) **EP 3 599 147 A1**
(43) Veröffentlichungstag der Anmeldung: **29.01.2020**
(21) Anmeldenummer: 18186148.5
(22) Anmeldetag: 27.07.2018
(51) Int. Cl.: B62D 35/00

(54) **AUFBAU EINES NUTZFAHRZEUGS MIT EINEM DER RÜCKWAND ZUGEORDNETEN SPOILERELEMENT**

(71) Anmelder: Schmitz Cargobull AG, 48341 Altenberge (DE)
(72) Erfinder: Wildhagen, Michael, 49076 Osnabrück (DE); Gözze-Leifheit, Ansgar, 48155 Münster (DE); Herbrich, Christian, 48324 Sendenhorst (DE); Jung, Bernd, 48612 Horstmar (DE); Bartke, Dieter, 48356 Nordwalde (DE)
(74) Vertreter: Cohausz & Florack

(57) **Zusammenfassung**

Beschrieben und dargestellt ist ein Aufbau (1) eines Nutzfahrzeugs (N), insbesondere Lastkraftwagens, Anhängers oder Sattelaufliegers, mit einem Dach (2), gegenüberliegenden Seitenwänden (4) und einer Rückwand (17), wobei wenigstens ein Spoilerelement (23,24,40,43,47,50,54,59) zur Verbesserung der Aerodynamik des Aufbaus (1) vorgesehen ist, wobei das Spoilerelement von einer der Rückwand (17) zugeordneten und gegenüber der Rückwand (17) nach hinten vorstehenden Fahrstellung in eine einer Seitenwand (4) oder dem Dach (2) zugeordneten Ladestellung und zurück verstellbar ist. Damit das wenigstens eine Spoilerelement leichter zu handhaben ist und die Handhabung des Aufbaus zum Be- und Entladen weniger beeinträchtigt wird, ist vorgesehen, dass das wenigstens eine Spoilerelement (23,24,40,43,47,50,54,59) sowohl in der Fahrstellung als auch in der Ladestellung an der Seitenwand (4) oder dem Dach unverlierbar festgelegt ist.

## Beschreibung

Die Erfindung betrifft einen Aufbau eines Nutzfahrzeugs, insbesondere Lastkraftwagens, Anhängers oder Sattelaufliegers, mit einem Dach, gegenüberliegenden Seitenwänden und einer Rückwand, wobei wenigstens ein Spoilerelement zur Verbesserung der Aerodynamik des Aufbaus vorgesehen ist, wobei das Spoilerelement von einer der Rückwand zugeordneten und gegenüber der Rückwand nach hinten vorstehenden Fahrstellung in eine einer Seitenwand oder dem Dach zugeordnete Ladestellung und zurück verstellbar ist.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

Sogenannte Kofferaufbauten weisen eine feste Stirnwand, feste Seitenwände und ein festes Dach auf, welche den Laderaum begrenzen und aus mehrlagigen Paneelen gebildet werden können. Kofferaufbauten sind aufgrund der festen Wände und des festen Dachs in besonderem Maße für den Transport von feuchtigkeitsempfindlichen und/oder temperaturempfindlichen Gütern, also beispielsweise für den sogenannten Trockentransport und/oder den Kühltransport, geeignet.

Neben Kofferaufbauten sind zudem sogenannte Planenaufbauten bekannt, bei denen die Seitenwände und bedarfsweise auch das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Das Dach von Planenaufbauten weist typischerweise seitlich angeordnete Längsholme auf, die unter Bildung einer Rahmenstruktur quer zum Nutzfahrzeug über Spriegel miteinander verbunden sind. Die Rahmenstruktur trägt dann die das Dach verschließende Dachplane, wobei die Rahmenstruktur durch Rungen getragen wird, die sich wenigstens an den vorderen beiden Ecken und den hinteren beiden Ecken des Nutzfahrzeugs befinden. Die vorderen Eckrungen können dabei einen Teil der Stirnwand und die hinteren Eckrungen einen Teil der Rückwand bzw. des Rückwandportals bilden, das die rückwärtigen Flügeltüren trägt und das durch die Flügeltüren verschlossen werden kann.

Eine Seitenwandplane kann zum Zwecke des Aufschiebens und Verschließens der entsprechenden Seitenwand mit Schlitten am zugehörigen Längsholm gehalten sein, wobei die Schlitten Planenlaufrollen aufweisen können, die über Planenlaufflächen des Längsholms in Längsrichtung des Längsholms abrollen können. Zum Verschließen der Seitenwand durch die Seitenwandplane wird die Seitenwandplane formschlüssig mit einer vorderen Eckrunge und einer hinteren Eckrunge verbunden. Hierzu können entweder Hakenprofile oder Planenspannrohre genutzt werden. Während die Seitenwandplane in einem Hakenprofil lediglich formschlüssig aufgenommen und an der entsprechenden Eckrunge gehalten werden kann, erlaubt die Verwendung eines Planenspannrohrs zusätzlich das Aufwickeln überschüssigen Planenmaterials und damit das Strammziehen der Seitenwandplane entlang der zu verschließenden Öffnung des Planenaufbaus. Das Planenspannrohr kann zu diesem Zweck mit der Seitenwandplane in eine Aufnahme in der Eckrunge eingehängt und dort um die Längsachse des Planenspannrohrs gedreht werden. Die Seitenwandplane wird dabei teilweise um das Planenspannrohr gewickelt und die Seitenwandplane so stramm gezogen.

Um das Be- und/oder Entladen von Planenaufbauten zu vereinfachen, können insbesondere die Eckrungen höhenverstellbar ausgebildet sein. Dadurch kann das Dach insgesamt, an bestimmen Ecken und/oder einer bestimmten Seite des Nutzfahrzeugs angehoben werden, je nachdem wo das Be- und/oder Entladen erfolgen soll. Das wenigstens bereichsweise Anheben des Dachs erlaubt das Be- und Entladen von Ladung mit einer Höhe, die etwa der maximalen Ladehöhe des Laderaums entspricht, ohne dass das Beladen durch den seitlichen Längsholm des Dachs behindert wird. Zusätzlich oder alternativ können Dächer von Planenaufbauten auch in unterschiedlichen Höhen in verschiedenen Fahrstellungen angeordnet werden. Auf diese Weise kann das Dach jeweils an die maximal zulässige Gesamthöhe des Nutzfahrzeugs und/oder an die Höhe der geladenen Ladung angepasst werden, um so möglichst viel Ladung transportieren und/oder den Luftwiderstand des Nutzfahrzeugs minimieren zu können. Zusätzlich besteht das Bestreben, das hintere Ende des Dachs während der Fahrt niedriger anzuordnen als das vordere Ende des Dachs, um einen aerodynamischeren Planenaufbau bereitzustellen, welcher der Einsparung von Treibstoff dient.

Um die Eckrungen höhenverstellbar auszubilden, ist es bekannt, die Eckrungen mit einem Rungenschiebling zu versehen, der mit dem Dach, insbesondere mit dem Längsholm, verbunden ist. Der Rungenschiebling ist dabei teilweise in einem Rungengrundkörper aufgenommen und wenigstens teilweise aus dem Rungengrundkörper nach oben ausziehbar vorgesehen. Zudem kann der Rungenschiebling in unterschiedlichen Höhen relativ zum Rungengrundkörper am Rungengrundkörper festlegbar sein. Der Rungengrundkörper ist dabei fest mit dem Boden des Planenaufbaus verbunden.

Unabhängig von einer möglichen Höhenverstellbarkeit des Dachs kann das Dach ein Schiebeverdeck aufweisen, das es erlaubt, die das Dach verschließende Dachplane nach vorne zu verschieben, um das Dach wenigstens teilweise für das Be- und/oder Entladen von oben zu öffnen. Dazu ist das Schiebeverdeck über Schlitten an die Längsholme des Planenaufbaus angebunden. Die Schlitten weisen dabei insbesondere Planenlaufrollen auf, die über Planenlaufflächen der Längsholme in Längsrichtung der Längsholme abrollen können. Zum Schließen des Dachs wird der am hinteren Ende des Schiebeverdecks vorgesehene Verdecklaufwagen mit der Rückwand bzw. dem Rückwandportal verriegelt, um ein versehentliches Öffnen des Schiebeverdecks zu verhindern.

Bei Planenaufbauten ebenso wie bei Kofferaufbauten besteht ein steigendes Interesse an aerodynamisch günstigen Ausgestaltungen, um die Verwirbelungen des Fahrtwinds hinter der Rückwand des Aufbaus zu vermeiden, sind bereits Spoilerelemente vorgeschlagen worden, die von einer der Rückwand zugeordneten und gegenüber der Rückwand nach hinten vorstehenden Fahrstellung in eine einer Seitenwand oder dem Dach zugeordnete Ladestellung und zurück verstellbar sind. Die Spoilerelemente können dabei dem Dach zugeordnet sein und sich von der Dachkante schräg nach hinten und unten erstrecken. Zudem können Spoilerelemente den Seitenwänden zugeordnet sein und sich von den Eckrungen schräg nach hinten und innen erstrecken. Da die Spoilerelemente an der Rückwand des Aufbaus festgelegt sind, wo in der Regel Flügeltüren zum Öffnen des Aufbaus für den Zugang zum Laderaum vorgesehen sind, müssen die Spoilerelemente vor dem Öffnen der Flügeltüren eingeklappt werden. Dies sollte zudem so erfolgen, dass das Heranfahren des Aufbaus an eine Laderampe durch die Spoilerelemente nicht behindert wird. Dabei können die Spoilerelemente auch den Öffnungswinkel der Flügeltüren beschränken, was das Heranfahren an eine Laderampe bzw. das Be- und Entladen grundsätzlich behindern kann.

Daher liegt der vorliegenden Erfindung die Aufgabe zugrunde, den eingangs genannten und zuvor näher beschriebenen Aufbau derart auszugestalten und weiterzubilden, dass das wenigstens eine Spoilerelement leichter zu handhaben ist und die Handhabung des Aufbaus zum Be- und Entladen weniger beeinträchtigt. Diese Aufgabe ist bei einem Aufbau nach dem Oberbegriff von Anspruch 1 dadurch gelöst, dass das wenigstens eine Spoilerelement sowohl in der Fahrstellung als auch in der Ladestellung an der Seitenwand oder dem Dach unverlierbar festgelegt ist.

Da das wenigstens eine Spoilerelement an der Seitenwand oder dem Dach und nicht grundsätzlich an der Rückwand selbst festgelegt ist, kann es sehr einfach zwischen der Fahrstellung und der Ladestellung hin und her verstellt werden. Zudem kann das wenigstens eine Spoilerelement in der Fahrstellung hinter der Rückwand angeordnet und in der Ladestellung zur Seite bzw. nach oben verstellt werden, um die Rückwand freizugeben. Die Freigabe der Rückwand erlaubt das problemlose Heranfahren des Aufbaus an eine Laderampe und die einfache Handhabung der Flügeltüren der Rückwand des Aufbaus. Dabei kann durch geeignete Spoilerelemente zudem sichergestellt werden, dass ein großer Öffnungswinkel für die Flügeltüren erreichbar ist. Die Spoilerelemente stören so die Handhabung des Aufbaus nur unwesentlich.

Die Erfindung hat mithin erkannt, dass es zweckmäßig ist, die Spoilerelemente an einer Seitenwand oder einem Dach festzulegen, obwohl die Spoilerelemente doch dazu vorgesehen sind, ihre Funktion dann zu erfüllen, wenn sie hinter der Rückwand positioniert sind. Die Spoilerelemente können nämlich auch dann ohne Weiteres hinter der Rückwand positioniert werden, wenn sie an einer Seitenwand oder einem Dach festgelegt sind. Dabei können die Spoilerelemente bedarfsweise auch temporär mit der Rückwand verbunden sein. Diese Verbindung ist aber nicht erforderlich, um die Spoilerelemente am Aufbau zu halten. Hierzu dient die Verbindung mit einer Seitenwand oder einem Dach. Wenn diese Verbindung, insbesondere nur diese Verbindung, besteht, lässt sich das Spoilerelement einfach und zuverlässig im Bereich der Seitenwand oder des Dachs halten, ohne dass davon die Rückwand selbst oder der Raum unmittelbar hinter der Rückwand in nennenswertem Maße oder überhaupt betroffen sein muss.

Bei einer ersten besonders bevorzugten Ausgestaltung des Aufbaus ist das wenigstens eine Spoilerelement in der Fahrstellung lösbar, insbesondere formschlüssig, kraftschlüssig, über einen Klettverschluss und/oder magnetisch, mit der Rückwand verbunden. Auf diese Weise wird die Position des Spoilerelements in der Fahrstellung auch bei höheren Geschwindigkeiten stabilisiert und damit eine gute Aerodynamik des Aufbaus sichergestellt. Alternativ oder zusätzlich kann das wenigstens eine Spoilerelement in der Ladestellung über eine zusätzliche, lösbare Verbindung, insbesondere formschlüssige Verbindung, kraftschlüssige Verbindung, über einen Klettverschluss und/oder über eine magnetische Verbindung, mit der Seitenwand oder dem Dach verbunden sein. So kann das Spoilerelement auf einfache Weise und zuverlässig in einer geeigneten Position in der Ladestellung gehalten werden, in der das Spoilerelement die Handhabung des Aufbaus und die Handhabung der Flügeltüren nicht beeinträchtigt. Als Verbindungen kommen in beiden Fällen unterschiedliche Verbindungen in Frage. Besonders bevorzugt sind dabei solche, die sich leicht und schnell fügen sowie sich leicht und schnell wieder lösen lassen. Da die Verbindungen regelmäßig nur überschaubaren Kräften ausgesetzt sein werden, bietet sich beispielsweise ein Klettverschluss und/oder eine magnetische Verbindung an. Klettverschlüsse sind besonders leicht, während magnetische Verbindung durch Verschmutzungen verhältnismäßig wenig beeinträchtigt werden.

Besonders einfach, schnell und zuverlässig lässt sich das wenigstens eine Spoilerelement von der Fahrstellung in die Ladestellung und zurück verstellen, wenn das wenigstens eine Spoilerelement einen Scharnierabschnitt zum Umklappen des wenigstens einen Spoilerelements von der Fahrstellung in die Ladestellung und zurück aufweist. Dies lässt sich besonders zweckmäßig bewerkstelligen, wenn das Scharnierelement für ein einer Seitenwand zugeordnetes Spoilerelement wenigstens im Wesentlichen parallel zur hinteren Eckrunge ausgerichtet ist. Im Falle eines dem Dach zugeordneten Spoilerelements bietet es sich dagegen an, wenn das Scharnierelement wenigstens im Wesentlichen parallel zum hinteren Ende des Dachs ausgerichtet ist. Zudem ist es konstruktiv einfach, wenn das Scharnierelement durch einen aus einem Planenmaterial gebildeten Abschnitt des Spoilerelements gebildet wird. Alternativ oder zusätzlich ist es weiter zweckmäßig, wenn der Scharnierabschnitt der Seitenwand oder dem Dach zugeordnet ist, und zwar insbesondere in Abhängigkeit davon, ob das Spoilerelement auch der Seitenwand oder dem Dach zugeordnet ist. Dies gilt insbesondere dann, wenn der Scharnierabschnitt an der Seitenwand oder dem Dach festgelegt ist, was auch konstruktive Vorteile mit sich bringt.

Das Verstellen des wenigstens einen Spoilerelements zwischen der Fahrstellung und der Ladestellung kann, insbesondere unter Einsparung eines Scharnierabschnitts, vereinfacht werden, wenn das wenigstens eine Spoilerelement, insbesondere über Langlöcher, in Längsrichtung des Aufbaus gegenüber der Seitenwand und der Rückwand von der Fahrstellung in die Ladestellung und zurück verschiebbar vorgesehen ist. Soll das Spoilerelement in die Fahrstellung verstellt werden, muss es lediglich gegenüber dem Aufbau nach hinten ausgezogen werden, beispielsweise bis das Spoilerelement in Anlage an einen hinteren Endanschlag gelangt. Um das Spoilerelement wieder zurück in die Ladestellung zu verstellen, muss das Spoilerelement lediglich in Richtung der Vorderseite des Aufbaus eingeschoben werden, beispielsweise bis das Spoilerelement in Anlage an einen vorderen Endanschlag gelangt

Das wenigstens eine Spoilerelement kann einfach und dauerhaft mit der Seitenwand oder dem Dach durch Verschweißen verbunden werden. Das Verschweißen kommt dabei insbesondere dann in Frage, wenn das wenigstens eine Spoilerelement einerseits und die Seitenwand bzw. das Dach andererseits wenigstens teilweise aus einem Planenmaterial gebildet wird. Planenmaterialien, wie sie beispielsweise aus der Herstellung von Seitenwandplanen und/oder Dachplanen bekannt sind, lassen sich sehr einfach und dauerhaft miteinander verschweißen, und die Schweißverfahren sind zuverlässig und ausgereift. Alternativ oder zusätzlich zu einem Verschweißen können Verbindungen zwischen Spoilerelement und Seitenwand bzw. Dach auch dadurch einfach und zuverlässig durch einen Reißverschluss, eine Kederleiste, Schrauben und/oder Nieten bereitgestellt werden. Unabhängig davon kann das wenigstens eine Spoilerelement in der Fahrstellung auch durch wenigstens ein Band gegenüber der Rückwand abgespannt sein. Dadurch wird die Position des wenigstens einen Spoilerelements in der Fahrstellung auch bei höheren Geschwindigkeiten des Aufbaus stabilisiert. Eine Möglichkeit für das Abspannen besteht darin, dass das Spoilerelement mit einem Haken versehen ist, welcher sich an der Rückwand, insbesondere an einer Flügeltür, einhaken lässt. Dabei kann der Haken über wenigstens ein, insbesondere flexibles, Band mit dem Spoilerelement verbunden sein, so dass das Spoilerelement zur Rückwand, insbesondere zur Flügeltür, hin gezogen wird. Grundsätzlich kann das Spoilerelement an nur einer Stelle oder aber an mehreren Stellen gegenüber der Rückwand abgespannt sein. Dabei kann das wenigstens eine Spoilerelement beispielsweise über mehrere Haken, die bedarfsweise über mehrere Bänder an dem Spoilerelement festgelegt sind, an der Rückwand abgespannt sein. Es kann aber auch vorgesehen sein, dass wenigstens ein Band an unterschiedlichen Stellen entlang des Spoilerelements mit dem Spoilerelement verbunden ist und dieses Band über ein oder mehrere Haken an der Rückwand zum Abspannen des Spoilerelements befestigt ist. Dabei kann die Anzahl der Haken insbesondere geringer sein, als die Anzahl der Verbindungsstellen zwischen dem wenigstens einen Band und dem wenigstens einen Spoilerelement.

Besonders einfach kann ein Aufbau mit Spoilerelementen an den Seitenwänden und/oder am Dach versehen werden, wenn es sich bei dem Aufbau um einen Planenaufbau handelt. Dann ist eine Verbindung mit der entsprechenden Plane möglich. Durch das Festlegen des wenigstens einen Spoilerelements an der Seitenwand oder dem Dach kann ein Spoilerelement aber auch bevorzugt bei einem Kofferaufbau eingesetzt werden. Im Falle eines Planenaufbaus kann es bevorzugt sein, wenn an der wenigstens einen Seitenwand eine Seitenwandplane, insbesondere eine zum Öffnen und zum Verschließen des Aufbaus in Längsrichtung verschiebbare Seitenwandplane, vorgesehen ist. Seitenwandplanen bieten die Möglichkeit der einfachen und schnellen Montage von Spoilerelementen. Im Falle von verschiebbaren Seitenwandplanen, man spricht bei solchen Aufbauten auch von Curtainsider-Aufbauten, kann das Spoilerelement mit der Seitenwandplane verschoben werden. Zudem behindert in diesem Falle das Spoilerelement nicht das Öffnen bzw. das Verschieben der Seitenwandplane. Analog dazu ist es grundsätzlich für die Montage des Spoilerlements zweckmäßig, wenn hierzu an dem Dach eine Dachplane vorgesehen ist. Wenn die Dachplane zum Öffnen und zum Verschließen des Aufbaus in Längsrichtung verschiebbar mit einem sogenannten Schiebverdeck verbunden ist, kann das entsprechende Spoilerelement einfach mit der Dachplane verschoben werden bzw. behindert das Spoilerelemente das Öffnen bzw. Verschieben der Dachplane nicht.

Zur einfachen Montage des wenigstens einen Spoilerelements kann das wenigstens eine Spoilerelement wenigstens einen Schiebling und die wenigstens eine Seitenwand und/oder das Dach wenigstens eine korrespondierende Aufnahme zur Aufnahme des wenigstens einen Schieblings aufweisen. Auf diese Weise kann das Spoilerelement ohne Weiteres sicher mit der Seitenwand und/oder dem Dach verbunden werden. Dabei ist es besonders zweckmäßig und einfach, wenn die wenigstens eine Aufnahme als Planentasche einer Seitenwandplane und/oder als Planentasche der wenigstens einen Dachplane ausgebildet ist.

Eine konstruktiv einfache Variante kann erreicht werden, wenn das wenigstens eine Spoilerelement als eine aus einem Planenmaterial gerfertigte und mit einem Füllmaterial, insbesondere aus einem geschäumten Kunststoff, gefüllte Planentasche ausgebildet ist. So ist das Spoilerelement einerseits leicht und kann nicht versehentlich brechen. Alternativ oder zusätzlich kann das wenigstens eine Spoilerelement auch als aus einem Planenmaterial gerfertigte Planentasche zum Aufblasen durch den Fahrtwind ausgebildet sein. Dann weist die Planentasche insbesondere Öffnungen auf, durch welche der Fahrtwind in die Planentasche gelangen kann, um die Planentasche so aufzublasen. Bedarfsweise ist noch wenigstens eine Öffnung vorgesehen, durch welche der Fahrtwind anschließend wieder aus der Planentasche austreten kann. Wenn ein steiferes Spoilerelement bereitgestellt werden soll, das seine Form zuverlässig beibehält, kann das wenigstens eine Spoilerelement aus einem Kunststoff, insbesondere glasfaserverstärktem Kunststoff, gebildet sein.

Um das wenigstens eine Spoilerelement in einfacher Weise in die Fahrstellung zu bringen, kann es sich anbieten, wenn wenigstens eine Seitenwandplane in der Fahrstellung mit dem hinteren Ende an der rückwärtigen Seite der Rückwand, insbesondere einer Flügeltür, festgelegt, insbesondere formschlüssig an einem Verbindungsmittel der Rückwand gehalten, ist. Dann kann das wenigstens eine Spoilerelement über dieses hintere Ende der Seitenwandplane an der Seitenwand festgelegt werden. Beim Schließen der Seitenwandplane wird dann das wenigstens eine Spoilerelement mit dem hinteren Ende der Seitenwandplane um die Eckrunge herum zur Rückwand umgeschlagen, wo das hintere Ende der Seitenwandplane an der Rückwand festgelegt wird. Dann kann zudem in einfacher Weise das wenigstens eine Spoilerelement über wenigstens ein, insbesondere elastisches, Band gegenüber der Rückwand abgespannt werden. Das Band kann dabei in einfacher Weise an der Flügeltür, am hinteren Ende der Seitenwandplane und/oder an dem Verbindungsmittel der Rückwand für das hintere Ende der Seitenwand festgelegt werden.

Alternativ oder zusätzlich kann das wenigstens eine Spoilerelement zusammen mit der Seitenwandplane zum Öffnen und/oder zum Verschließen des Aufbaus in Längsrichtung des Planenaufbaus von einer geschlossenen Stellung der Seitenwandplane in eine geöffnete Stellung der Seitenwandplane und zurück verschiebbar vorgesehen sein. Dazu ist das wenigstens eine Spoilerelement an der Seitenwandplane festgelegt. Das wenigstens eine Spoilerelement stört dabei die Handhabung der Seitenwandplane nicht und kann zusammen mit der Seitenwandplane vom hinteren Ende des Aufbaus entfernt und nach vorne verschoben werden. Ebenso kann das wenigstens eine Spoilerelement zusammen mit der Dachplane zum Öffnen und/oder zum Verschließen des Aufbaus in Längsrichtung des Planenaufbaus von einer geschlossenen Stellung der Dachplane in eine geöffnete Stellung der Dachplane und zurück verschiebbar vorgesehen sein. Dazu ist das wenigstens eine Spoilerelement an der Dachplane festgelegt. Das wenigstens eine Spoilerelement stört dabei die Handhabung der Dachplane nicht und kann zusammen mit der Seitenwandplane vom hinteren Ende des Aufbaus entfernt und nach vorne verschoben werden.

Die Aerodynamik des Aufbaus kann weiter verbessert werden, wenn das wenigstens eine Spoilerelement wenigstens einen Düsenkanal zum Durchströmen mit Fahrtwind aufweist und dass der wenigstens eine Düsenkanal am rückwärtigen Ende des wenigstens einen Spoilerelements wenigstens eine Düsenöffnung zum Ausströmen des den wenigstens Düsenkanal passierenden Fahrtwinds nach hinten aufweist. Der Fahrtwind strömt dabei in den Düsenkanal ein und wird dabei zur Düsenöffnung geleitet, wo der Fahrtwind austritt und eine unmittelbare Verwirbelung des seitlich an dem Spoilerelement vorbeiströmenden Fahrtwinds verhindert. Dies funktioniert besonders gut, wenn sich der Düsenkanal bis zur Düsenöffnung verjüngt, um so den Fahrtwind in dem Düsenkanal bis zur Düsenöffnung zu beschleunigen.

Besonders zweckmäßig für das Handling des Aufbaus ist es, wenn das wenigstens eine Spoilerelement bei geschlossener Rückwand, insbesondere geschlossener Flügeltür, von der Fahrstellung in die Ladestellung und zurück verstellbar vorgesehen ist, was sich insbesondere durch das Festlegen des wenigstens einen Spoilerelements an der Seitenwand bzw. dem Dach problemlos realisieren lässt. Alternativ oder zusätzlich kann das wenigstens eine Spoilerelement in der Ladestellung gegenüber der Seitenwand zur Seite oder gegenüber dem Dach nach oben vorstehen, so lässt sich das Spoilerelement beim Verstellen in die Ladestellung aus dem Bereich der Rückwand entfernen, ohne dass es hierzu größerer Umbauten oder aufwendiger Handgriffe durch den Benutzer bedarf. Grundsätzlich ist es besonders zweckmäßig, wenn das wenigstens eine Spoilerelement in der Ladestellung nicht gegenüber der Rückwand nach hinten vorsteht. Der gesamte rückwärtige Bereich des Aufbaus kann so zum Rangieren, zum Anfahren einer Laderampe und/oder zum Be- und Entladen genutzt werden.

Um die Aerodynamik des Aufbaus zu verbessern, bietet es sich an, wenn das Dach rückwandseitig von einer oberen Fahrposition in eine untere Fahrposition und zurück verstellbar ausgebildet ist. Dabei ist dann bevorzugt das wenigstens eine Spoilerelement so ausgebildet und angeordnet, dass sich in der unteren Fahrposition des Dachs das wenigstens eine Spoilerelement in der Fahrstellung wenigstens im Wesentlichen über die gesamte Höhe der Rückwand erstreckt. Wenn der Aufbau mehr als zwei unterschiedliche Höhen des hinteren Endes des Dach zulässt, ist die vorbeschriebene Ausgestaltung und Anordnung des wenigstens einen Spoilerelements vorzugsweise für die unterste Fahrposition vorgesehen.

Für eine einfache und zuverlässige Höhenverstellung des Dachs kann das Dach rückwandseitig bevorzugt von zwei höhenverstellbaren Eckrungen getragen werden, die einen mit dem Boden des Aufbaus fest verbundenen Rungengrundkörper und einen fest mit dem Dach, insbesondere einem Längsholm des Dachs, verbunden Rungenschiebling umfassen. Dabei ist der Rungenschiebling wenigstens teilweise gegen über dem Rungengrundkörper ausziehbar am Rungengrundkörper gehalten. Um das Maß, um das der Rungenschiebling gegenüber dem Rungengrundkörper ausgezogen werden kann, kann der Rungenschiebling nachträglich wieder eingeschoben werden. Um das Dach in der jeweils gewünschten Höhe zu halten und während der Fahrt des Aufbaus zu fixieren, können die hinteren Eckrungen zum, insbesondere formschlüssigen, Festlegen der Rungenschieblinge gegenüber den Rungengrundkörpern in unterschiedlichen Höhen ausgebildet sein.

Nachfolgend wird die Erfindung anhand einer lediglich Ausführungsbeispiele darstellenden Zeichnung näher erläutert. In der Zeichnung zeigt
- Fig. 1: ein Nutzfahrzeug in Form eines Sattelaufliegers mit einem erfindungsgemäßen Aufbau in einer perspektivischen Ansicht,
- Fig. 2: die Rückwand des Aufbaus aus Fig. 1 mit den Spoilerelementen in der Fahrstellung in einer perspektivischen Ansicht,
- Fig. 3A-B: zwei Ausführungsformen eines Details der Rückwand in einer schematischen Schnittansicht,
- Fig. 4: die Rückwand des Aufbaus aus Fig. 1 mit den Spoilerelementen in der Ladestellung in einer perspektivischen Ansicht,
- Fig. 5: eine Seitenwand des Aufbaus aus Fig. 1 mit der Seitenwandplane in einer teilweise geöffneten Stellung in einer perspektivischen Ansicht,
- Fig. 6: das Dach des Aufbaus aus Fig. 1 mit der Dachplane in einer geöffneten Stellung in einer perspektivischen Ansicht,
- Fig. 7: die Rückwand des Aufbaus aus Fig. 1 mit den Spoilerelementen in der Fahrstellung und dem Dach in einer unteren Fahrposition in einer perspektivischen Ansicht,
- Fig. 8: ein Spoilerelement mit einem Düsenkanal in einer perspektivischen Ansicht,
- Fig. 9A+B: ein Nutzfahrzeug in Form eines Sattelaufliegers mit einem erfindungsgemäßen Aufbau in einer schematischen Explosionsdarstellung und in einer schematischen Seitenansicht,
- Fig. 10A+B: ein Nutzfahrzeug in Form eines Sattelaufliegers mit einem erfindungsgemäßen Aufbau mit einem Spoilerelement in einer Ladestellung und einer Fahrstellung in einer schematischen Seitenansicht,
- Fig. 11: ein Detail einer Rückwand eines erfindungsgemäßen Planenaufbaus in einer schematischen Schnittansicht,
- Fig. 12: ein Detail einer Rückwand eines anderen erfindungsgemäßen Planenaufbaus in einer schematischen Schnittansicht und
- Fig. 13A-B: zwei Ausführungsformen eines Detail einer Rückwand eines weiteren erfindungsgemäßen Planenaufbaus in einer schematischen Schnittansicht.

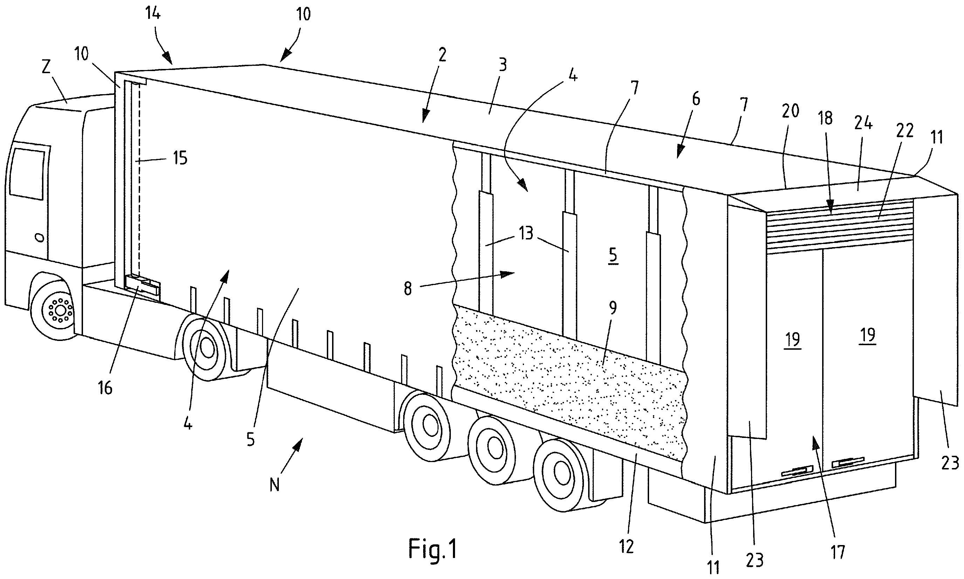

In der Fig. 1 ist ein von einer Zugmaschine Z gezogenes Nutzfahrzeug N in Form eines Sattelaufliegers dargestellt. Das Nutzfahrzeug N weist einen Aufbau 1 in Form eines Planenaufbaus, und zwar ausgestaltet als Curtainsider-Aufbau, auf, obwohl denkbar auch ein Kofferaufbau mit festen Seitenwänden und einem festen Dach wäre. Der dargestellte Aufbau 1 weist eine das Dach 2 verschließende Dachplane 3 und jeweils eine eine Seitenwand 4 verschließende Seitenwandplane 5 auf. Die Dachplane 3 ist dabei Teil eines Schiebeverdecks 6, welches zum Öffnen des Dachs 2 zum Be- und/oder Entladen des Aufbaus 1 nach vorne geschoben werden kann. Dazu ist das Schiebeverdeck 6 mit Laufrollen aufweisenden Schlitten an Längsholmen 7 derart gehalten, dass die Laufrollen entlang von Planenlaufflächen der Längsholme 7 in Längsrichtung der Längsholme 7 abrollen können, um das Schiebeverdeck 6 nach vorne und wieder zurück nach hinten schieben zu können.

An den Längsholmen 7 sind zudem die Seitenwandplanen 5 mit Schlitten gehalten. Die Seitenwandplanen 5 können in der Längsrichtung des Aufbaus 1 nach vorne und/oder nach hinten verschoben werden, wobei die Schlitten der Seitenwandplanen 5 über entsprechende Laufrollen an korrespondierenden Planenlaufflächen der Längsholme 7 verschoben werden können. Durch das Verschieben der Seitenwandplanen 5 in der Längsrichtung der Längsholme 7 können die Seitenwände 4 zum Be- und/oder Entladen unter Freigabe des Laderaums 8 sowie des Ladebodens 9 des Aufbaus 1 geöffnet und vor der Fahrt des Nutzfahrzeugs N wieder geschlossen werden.

Der Aufbau 1 weist an den umlaufenden vier vertikalen Kanten Eckrungen 10,11 auf, die einerseits mit dem den Ladeboden 9 tragenden Boden 12 des Aufbaus 1 verbunden sind und andererseits das Dach 2 bzw. die Längsholme 7 des Dachs 2 stützen. Zwischen den Eckrungen 10,11 können an den Seitenwänden 4 weitere Rungen vorgesehen sein, die aufgrund ihrer Anordnung als Mittelrungen 13 bezeichnet werden. Die Mittelrungen 13 können zudem im Gegensatz zu den Eckrungen 10,11 entfernt oder entlang des Längsholms 7 zur Seite geschoben werden, um die Zugänglichkeit des Laderaums 8 zum Be- und/oder Entladen zu verbessern.

An den den Seitenwänden 5 zugeordneten Seiten der vorderen Eckrungen 10, die auf der Höhe der Stirnwand 14 vorgesehen sind, sind die vorderen Enden der Seitenwandplanen 5 formschlüssig festgelegt. Die dargestellten und insoweit bevorzugten Seitenwandplanen 5 weisen dazu an den vorderen Enden Planenspannrohre 15 auf, die in die vorderen Eckrungen 10 eingehängt werden können. Die dargestellten und insoweit bevorzugten vorderen Eckrungen 10 weisen Ratscheneinrichtungen 16 auf, mit denen die Planenspannrohre 15 unter einem Aufwickeln von überschüssigem Planenmaterial der Seitenwandplanen 5 auf die Planenspannrohre 15 um ihre Längsachse gedreht werden können. Das Aufwickeln überschüssigen Planenmaterials der Seitenwandplanen 5 führt zu einem Strammziehen bzw. Spannen der Seitenwandplanen 5. Alternativ oder zusätzlich können auch an den hinteren Eckrungen Planenspannrohre und Ratscheneinrichtungen vorgesehen sein, um die Plane zu spannen. Beim dargestellten und insoweit bevorzugten Aufbau 1 sind die Seitenwandplanen 5 jedoch lediglich über Kederleisten in korrespondierenden Hakprofilen an den hinteren Eckrungen 11 festgelegt, so dass die Seitenwandplanen 5 nicht von hinten, sondern nur von vorne gespannt werden können.

Die Rückwand 17 des Aufbaus 1 weist ein Rückwandportal 18 und zwei an dem Rückwandportal 18 angebrachte Flügeltüren 19 auf, wobei das Rückwandportal 18 zwei hintere Eckrungen 11 und einen die hinteren Eckrungen verbindenden, oberen Querholm 20 umfasst. Die Flügeltüren 19 sind an ihren seitlichen Rändern über Scharniere 21 an den hinteren Eckrungen 11 angeschlagen und können demnach von der den Laderaum 8 teilweise verschließenden, geschlossenen Stellung seitlich in die den Laderaum teilweise freigebende, geöffnete Stellung geschwenkt werden.

Bei dem dargestellten und insoweit bevorzugten Aufbau 1 sind das vordere Ende und das hintere Ende des Dachs 2 unabhängig voneinander höhenverstellbar vorgesehen. Um zu vermeiden, dass beim Anheben des Dachs 2 zwischen dem Dach 2 und den Flügeltüren 19 der Rückwand 17 eine Öffnung entsteht, über die Feuchtigkeit in den Laderaum 8 gelangen kann, ist an der Rückwand 17 eine mit dem Dach 2 verbundene und sich nach unten erstreckende Rückwandschürze 22 vorgesehen. Die Rückwandschürze 22 verschließt dabei den Spalt zwischen dem Dach 2 und der Oberkante der Flügeltüren 19. Je höher das Dach 2 angehoben wird, desto weiter wird die Rückwandschürze 22 nach oben über die Flügeltüren 19 angehoben. Getragen wird das hintere Ende des Dachs 2 überwiegend von den hinteren Eckrungen 11.

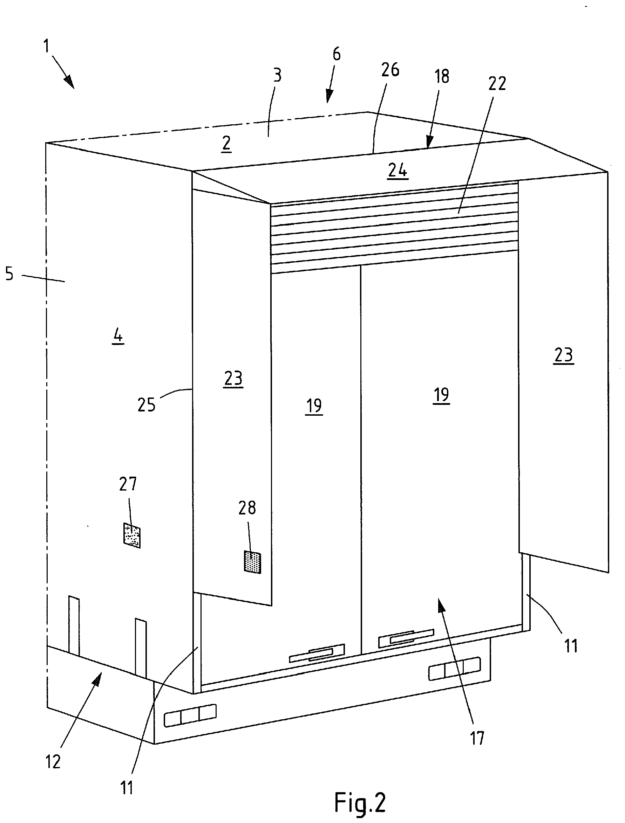

In der Fig. 2 ist die Rückwand 17 des Aufbaus 1 im Detail dargestellt, wobei zwei die Seitenwände 4 verlängernde Spoilerelemente 23 und ein das Dach 2 verlängerndes Spoilerelement 24 in einer Fahrstellung und wenigstens teilweise in einem Bereich hinter der Rückwand 17 angeordnet sind. Dort leiten die Spoilerelemente 23,24 den Fahrtwind und reduzieren so die Verwirbelungen am Heck des Aufbaus 1 zur Verringerung des Luftwiderstands. Dazu sind die Außenseiten der dargestellten Spoilerelemente 23,24 entweder leicht schräg nach innen bzw. leicht schräg nach unten gerichtet. Bei dem dargestellten und insoweit bevorzugten Aufbau 1 liegt das Spoilerelement 24 des Dachs 2 auf den Spoilerelementen 23 der Seitenwand 4 auf.

Fest verbunden sind die Spoilerelemente 23,24 entweder mit der zugehörigen Seitenwand 4 oder dem zugehörigen Dach 2. Die dargestellten und insoweit bevorzugten Spoilerelemente 23,24 sind jedoch nicht fest und dauerhaft, sondern allenfalls lösbar, an der Rückwand 17 festgelegt. Bei dem dargestellten Aufbau 1 bilden die sich vertikal erstreckenden Spoilerelemente 23 das hintere Ende einer Seitenwandplane 5, während das sich horizontal erstreckende Spoilerelement 24 das hintere Ende der Dachplane 3 darstellt. Dabei bilden die Dachplane 3 und die Seitenwandplane 5 eine Art Scharnierabschnitt 25,26 der sich je nach dem Spoilerelement 23,24 in etwa vertikaler Richtung längs der hinteren Eckrunge 11 oder etwa in horizontaler Richtung längs des hinteren Rands des Dachs 2 erstreckt. Über die Scharnierelemente 25 können die vertikalen Spoilerelemente 23 aus der Fahrstellung zur Seite in eine Ladestellung neben die zugehörige Seitenwand 4 geschwenkt werden. Damit die Spoilerelemente 23 in der Ladestellung neben der Seitenwand gehalten werden, sind die Seitenwandplanen 5 und die Spoilerelemente 23 mit korrespondierenden Klettelementen 27,28 versehen, die in einer Ladestellung zu einem Klettverschluss zusammengesetzt werden. Das horizontale Spoilerelement 24 kann dagegen infolge des Scharnierelements 26 aus der Fahrstellung in eine Ladestallung aus dem Dach 2 geschwenkt werden.

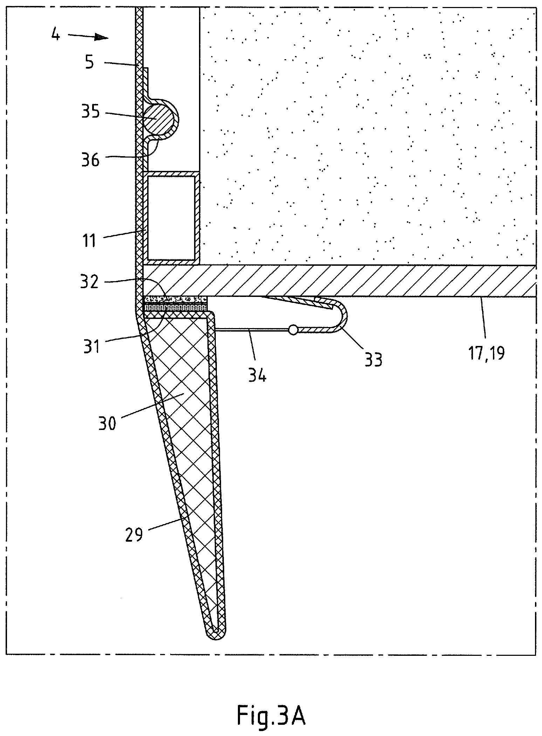

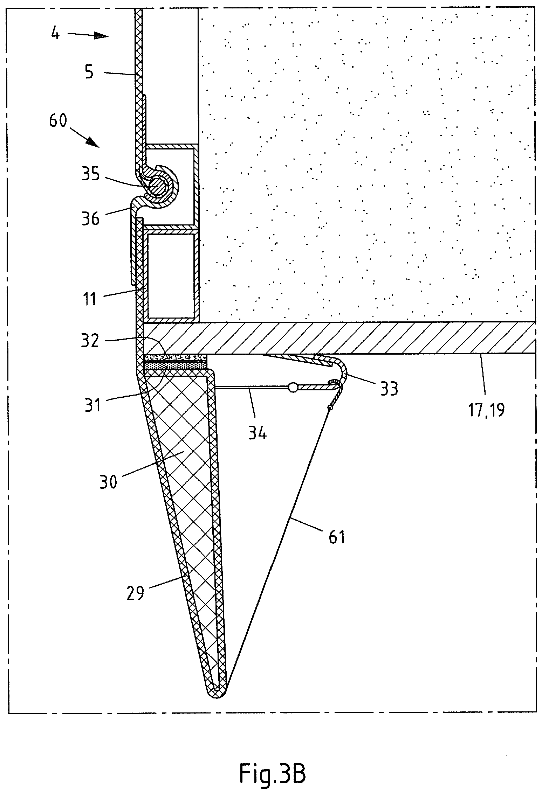

In den Fig. 3A-B ist ein Detail der Rückwand 17 in einer Schnittansicht dargestellt. Das Spoilerelement 23 der Fig. 3A wird durch eine Planentasche 29 gebildet, die mit einem Kunststoff 30, insbesondere einem geschäumten Kunststoff, gefüllt ist. Dabei weist die Planentasche 29 auf der der Rückwand zugeordneten Seite ein Klettelement 31 auf, das mit einem korrespondierenden Klettelement 32 der Rückwand 17 zu einem Klettverschluss zusammengesetzt wird, welcher das Spoilerelement 23 lösbar an der Rückwand hält. Die beiden anderen, in der Fig. 3 nicht dargestellten Spoilerelemente 23,24, sind analog lösbar mit der Rückwand 17 verbunden. Das dargestellte und insoweit bevorzugte Spoilerelement 23 weist zudem noch einen Haken 33 auf, der über ein, insbesondere elastisches, Band 34 am Spoilerelement 23 festgelegt ist. Der Haken 33 kann dabei an der Rückwand 17 bzw. der zugeordneten Flügeltür 19 eingehängt werden, um das Spoilerelement 23 nach innen und zur Rückwand 17 hin abzuspannen. Die Planentasche 29 wird bei dem dargestellten und insoweit bevorzugten Spoilerelement 23 zudem durch den hinteren Teil des Planenmaterials der zugehörigen Seitenwandplane 5 gebildet. Die Seitenwandplane 5 ist zudem seitlich über eine Kederleiste 35 in einem Hakprofil 36 der zugehörigen hinteren Eckrunge 11 des Aufbaus 1 formschlüssig festgelegt.

In der Fig. 3B ist dasselbe Detail wie in der Fig. 3A dargestellt, jedoch mit dem Unterschied, dass die Kederleiste 35 der Seitenwandplane 5 formschlüssig in einer Kederaufnahme 60 aufgenommen ist, um eine gewöhnliche Seitenwandplane 5 nachträglich mit einem entsprechenden Spoilerelement 23 verbinden zu können. Des Weiteren ist zur weiteren Positionierung des Spoilerelements 23 eine Strebe 61, etwa aus Metall, vorgesehen, die in den Haken 33 eingehängt werden kann, um das Spoilerelement 23 zu positionieren bzw. zu stabilisieren. Anstelle der Strebe 61 kann aber auch ein Band vorgesehen sein, so wie anstelle des Bands 34 auch eine Strebe vorgesehen sein kann.

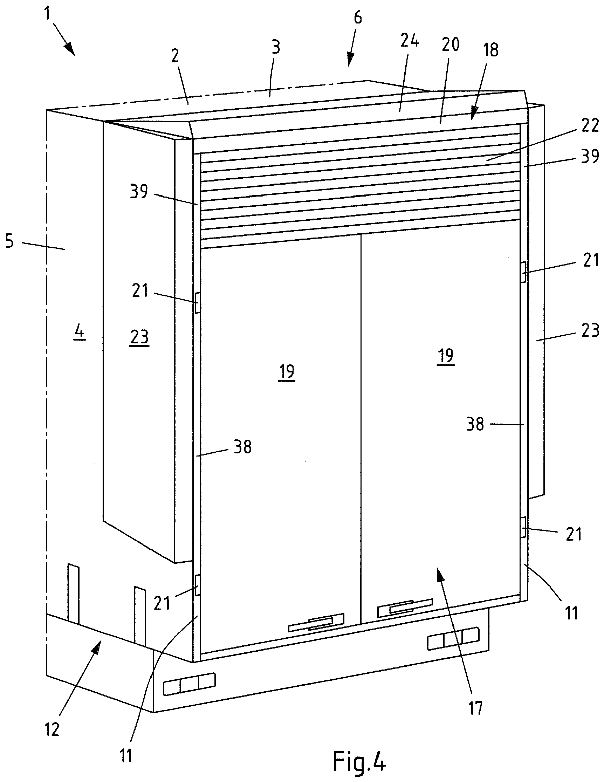

In der Fig. 4 sind die Spoilerelemente 23,24 um die Scharnierabschnitte 25,26 in die Ladestellung geschwenkt dargestellt. Dabei sind die Spoilerelemente 23,24 von der Rückwand 17 gelöst und stehen zudem nicht oder nicht nennenswert gegenüber der Rückwand 17 nach hinten über. So können die über Scharniere 21 an den hinteren Eckrungen 11 schwenkbar gehaltenen Flügeltüren 19 aus der dargestellten geschlossenen Position in eine den Zugang zum Laderaum 8 freigebenden geöffneten Position zur Seite geschwenkt werden, ohne dass dies durch die Spoilerelemente 23,24 verhindert oder nennenswert beeinträchtigt wird.

Die hinteren Eckrungen 11 sind zum Anheben oder Absenken des Endes des Dachs 2 höhenverstellbar ausgebildet. Dazu weisen die hinteren Eckrungen 11 fest mit dem Boden 12 des Aufbaus 1 verbundene Rungengrundkörper 38 und gegenüber den Rungengrundkörpern 38 ausziehbare und wieder einschiebbare Rungenschieblinge 39 auf. Die Rungenschieblinge 39 sind zudem mit einem Längsholm 7 des Dachs 2 verbunden. Zudem kann der Rungenschiebling 39 und damit das Dach 2 in mehreren Höhen gegenüber dem zugehörigen Rungengrundkörper 38 an dem Rungengrundkörper 38 festgelegt werden. Bedarfsweise sind auch die vorderen Eckrungen 10 höhenverstellbar und wie die hinteren Eckrungen 11 aus Rungengrundkörpern 38 und Rungenschieblingen 39, insbesondere analog zu den hinteren Eckrungen 11 aufgebaut. Über die entsprechende Höhenverstellung der Eckrungen 10,11 kann das Dach 2 in dem der jeweiligen Eckrunge 10,11 zugewandten Eckbereich nach oben oder unten verstellt werden. Dabei können die Rungenschieblinge 39 in unterschiedlichen Höhen gegenüber den Rungengrundkörpern 38 festlegelegt werden, um das Dach 2 im Bereich der entsprechenden Eckrunge 10,11 je nach Bedarf zuverlässig in unterschiedlichen Höhen halten zu können. Dabei können beim dargestellten und insoweit bevorzugten Aufbau 1 die Eckrungen 10,11 unabhängig voneinander in unterschiedlichen Höhen fixiert werden. So können die hinteren Eckrungen 11 tiefer angeordnet werden als die vorderen Eckrungen 10, so dass das Dach 2 nach hinten abfällt. Das Dach 2 kann aber auch an einer Seite höher angehoben sein, als an der gegenüberliegenden Seite, so dass das Dach 2 seitlich geneigt ist. Denkbar ist aber auch eine Überlagerung einer seitlichen Neigung des Dachs 2 und einer Neigung des Dachs 2 in der Längsrichtung des Aufbaus 1. In solch einem Fall können beispielsweise alle vier Eckrungen 10,11 eine unterschiedliche Höhe aufweisen. Je nachdem, wie das Dach 2 in seiner Höhe eingestellt wird, ist das Dach 2 parallel zum Ladeboden 9 ausgerichtet oder in der Längsrichtung des Aufbaus 1 und/oder in der Querrichtung des Aufbaus 1 gegenüber dem Ladeboden 9 geneigt.

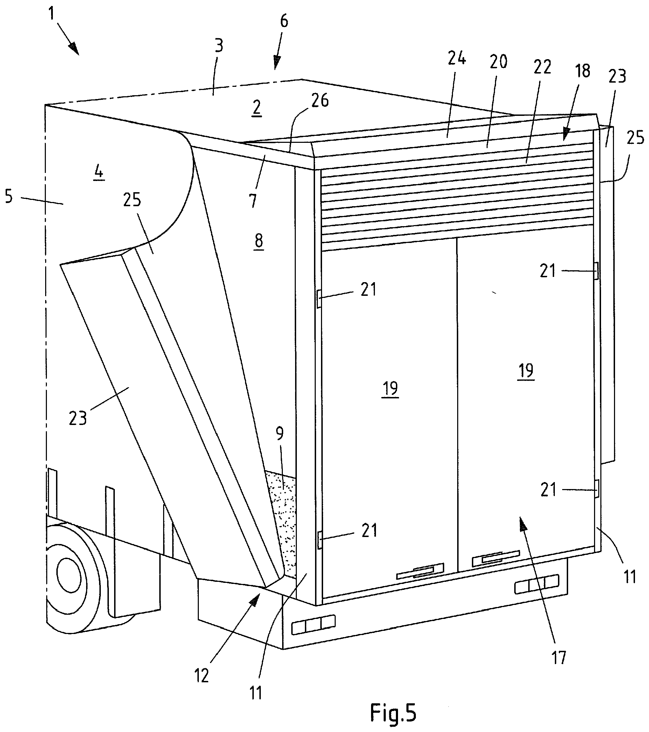

In der Fig. 5 ist der hintere Teil des Aufbaus 1 mit teilweise geöffneter Seitenwand 4 dargestellt. Da das Spoilerelement 24 den hinteren Teil der Seitenwandplane 5 bildet, kann das Spoilerelement 23 nach dem Öffnen der Seitenwandplane 5 durch Lösen der Seitenwandplane 5 von der hinteren Eckrunge 11 zusammen mit der Seitenwandplane 5 entlang des zugehörigen Längsholms 7 nach vorne verschoben werden. So wird einerseits ein seitlicher Zugang zum Laderaum 8 geschaffen und sichergestellt, dass das Öffnen der zugehörigen Flügeltür 19 der Rückwand 17 durch das Spoilerelement 23 nicht beeinträchtigt wird.

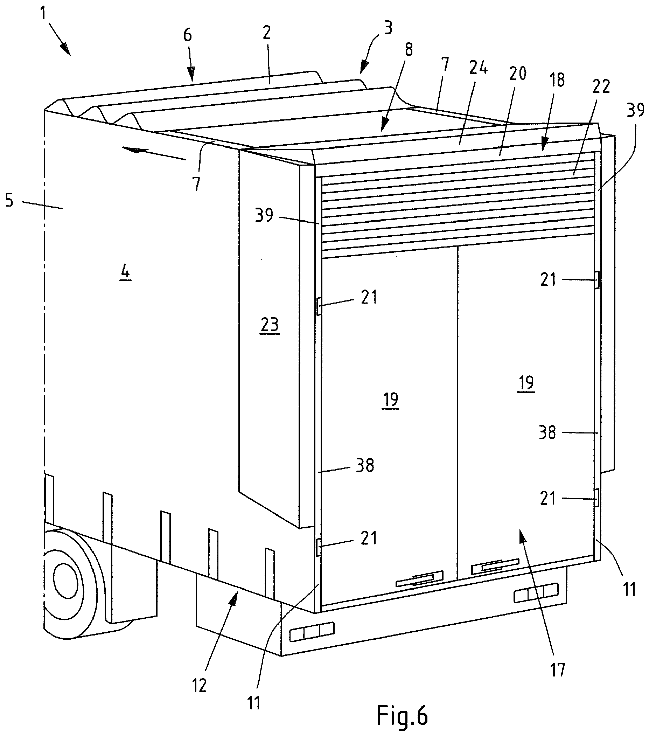

In der Fig. 6 ist der hintere Teil des Aufbaus 1 mit teilweise geöffnetem Schiebeverdeck 6 dargestellt. Obschon auch das horizontale Spoilerelement 4 als hinteres Teil der Dachplane 3 ausgebildet sein kann, wie dies analog in der Fig. 3 dargestellt ist, ist das Spoilerelement 24 als separates Kunststoffteil dargestellt, das nicht fest mit der Dachplane 3 verbunden ist. So kann das Schiebeverdeck 6 unabhängig von dem Spoilerelement 24 geöffnet werden. Dies hat den Vorteil, dass das Öffnen des Schiebeverdecks 6, insbesondere das Auffalten der Dachplane 3 durch das Spoilerelement 24 nicht beeinträchtigt wird. Über das geöffnete Schiebeverdeck 6 kann trotz des Spoilerelements 24 in der Ladestellung Zugang zum Laderaum 8 erhalten werden, der ein einfaches Be- und Entladen ermöglicht.

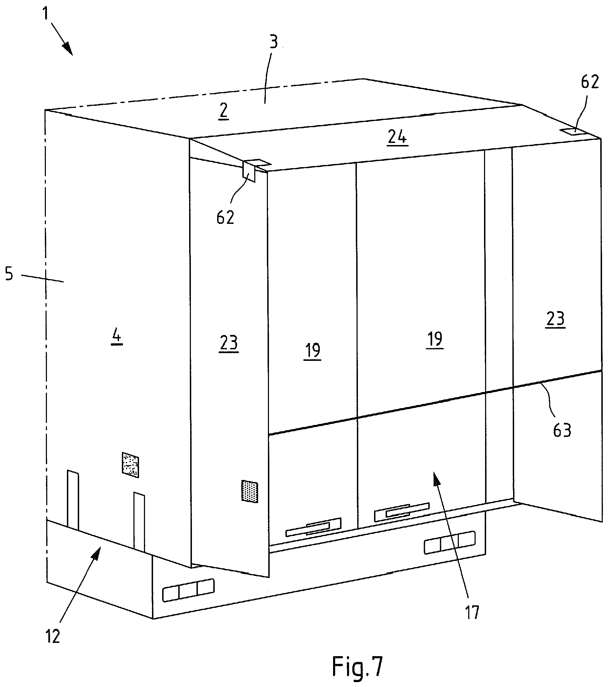

In der Fig. 7 ist die Rückwand 17 des Aufbaus 1 gemäß Fig. 1 dargestellt, mit den Spoilerelementen 23,24 in der Fahrstellung und dem Dach 2 in einer unteren Fahrposition, so dass der Luftwiderstand des Ausbaus 1 weiter gesenkt werden kann. In der unteren Fahrposition des Dachs 2 erstrecken sich die den Seitenwänden 4 zugeordneten Spoilerelemente 23 vom Spoilerelement 24 des Dachs 2 bis wenigstens im Wesentlichen zum Boden 12 des Aufbaus. Die den Seitenwänden 4 zugeordneten Spoilerelemente 23 müssen also beim Herunterstellen des Dachs 2 nicht eingekürzt werden, obwohl dies durch längenveränderliche Spoilerelemente auch problemlos möglich wäre. Dabei können an den Rändern des Spoilerelements 24 des Dachs 2 bedarfsweise Haltewinkel 62 vorgesehen sein, die ein Schwenken der Spoilerelemente 23 der Seitenwand 4 nach außen durch eine formschlüssige Anlage an den Haltewinkeln 62 des Spoilerelements 24 des Dachs 2 verhindern. Alternativ oder zusätzlich könnten zwischen dem Spoilerelement 24 des Dachs 2 und den Spoilerelementen 23 der Seitenwand 4 auch Magnetverbindungen vorgesehen sein, die einerseits lösbar sind und andererseits die Spoilerelemente 23,24 in der Fahrstellung gemäß Fig. 7 aneinander halten. Ebenfalls alternativ oder zusätzlich können die Spoilerelemente 23 der Seitenwände 4 untereinander über ein, insbesondere elastisches, Band 63 verbunden sei, um die Spoilerelemente 23 zu positionieren und/oder zu stabilisieren. Auch hier könnte anstelle eines Bands auch eine Strebe, insbesondere aus Metall, vorgesehen sein.

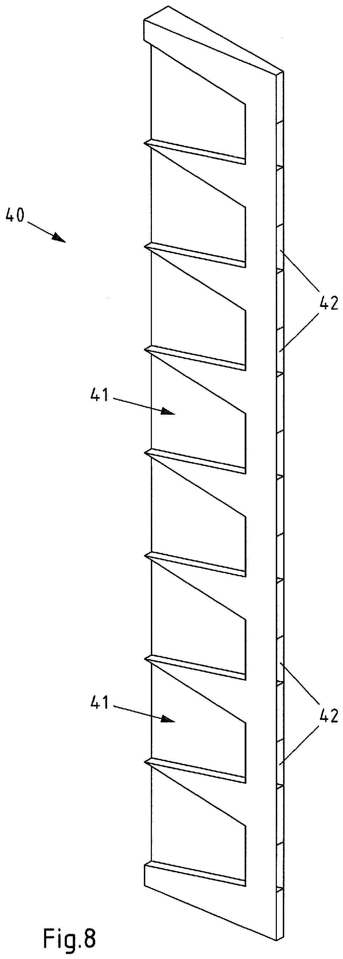

In der Fig. 8 ist ein Spoilerelement 40 mit Düsenkanälen 41 dargestellt, die sich in Richtung des freien Endes des Spoilerlements 40 erstrecken und wenigstens teilweise zu der vom Aufbau 1 weg weisenden Seite offen sind. So kann der Fahrwind in die Düsenkanäle 41 gelangen, die sich in Richtung zum freien Ende verjüngen und so zu einer Beschleunigung der Strömung beitragen. Am Ende des Düsenkanals 41 befindet sich eine umlaufend geschlossene Düsenöffnung 42, die bezogen auf den Aufbau nach hinten weist. Die aus der Düsenöffnung 42 ausströmende Luft verringert die Verwirbelungen am freien Ende des Spoilerelements 40 und dahinter. Das dargestellte und insoweit bevorzugte Spoilerelement 40 kann sowohl einer Seitenwand 4 als auch einem Dach 2 zugeordnet sein.

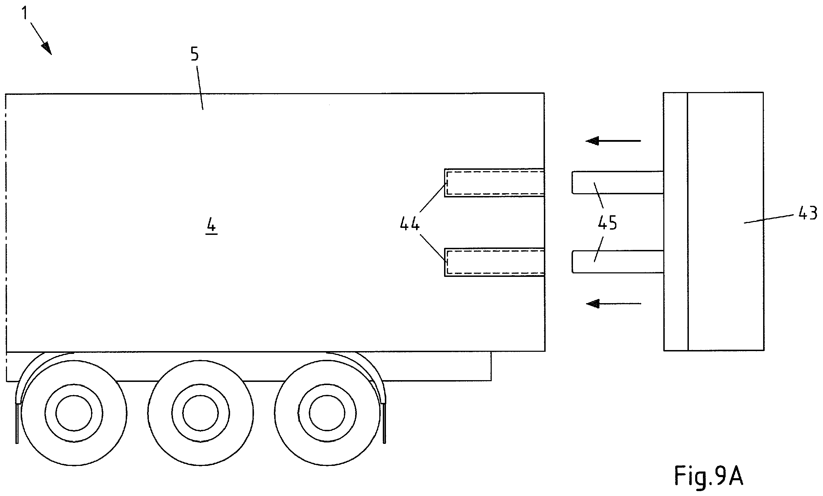

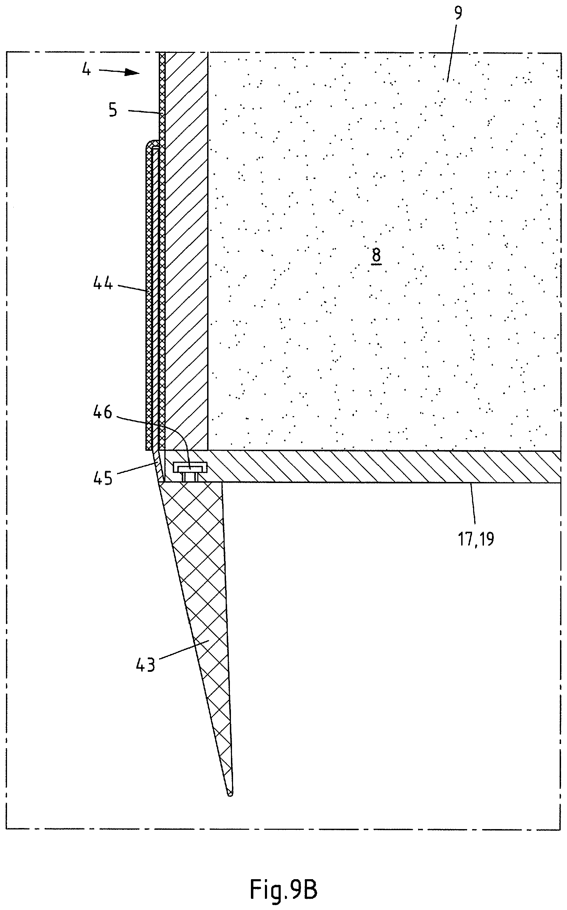

In den Fig. 9A-B ist eine Verbindung eines Spoilerelements 43 mit einer Seitenwand 4 dargestellt. Dabei sind an der Seitenwandplane 5 der Seitenwand 4 Aufnahmen 44 in Form von Planentaschen ausgebildet, in die Schieblinge 45 des Spoilerelements 43 eingeschoben werden können. Zusätzlich zu diesem Einschieben der Schieblinge 45 in die Aufnahmen 44 kann das Spoilerelement noch auf andere Weise mit der entsprechenden Seitenwand 4 verbunden sein. Beispielsweise kann das Spoilerelement 43 noch ein Hakenelement 46, etwa in Form eines Nutensteins, zum formschlüssigen Eingreifen in die Rückwand 17, insbesondere in eine T-Nut, aufweisen. So wird das Spoilerelement 43 zuverlässig und unverlierbar am Aufbau 1 gehalten. Eine entsprechende Verbindung über Aufnahmen 44 und Schieblinge 45 kommt auch für dem Dach 2 zugeordnete Spoilerelemente 43 in Frage.

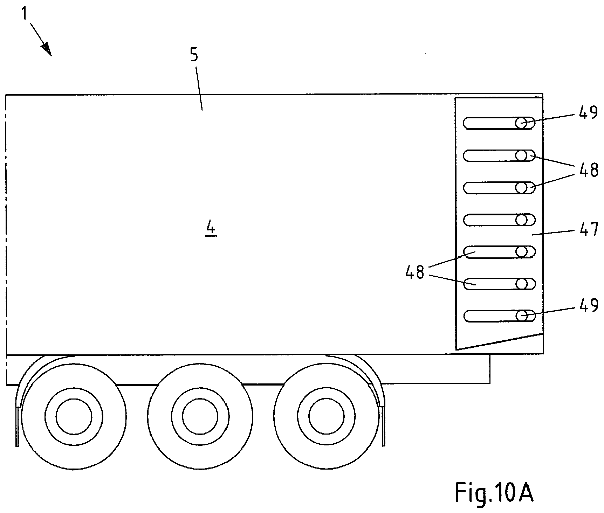

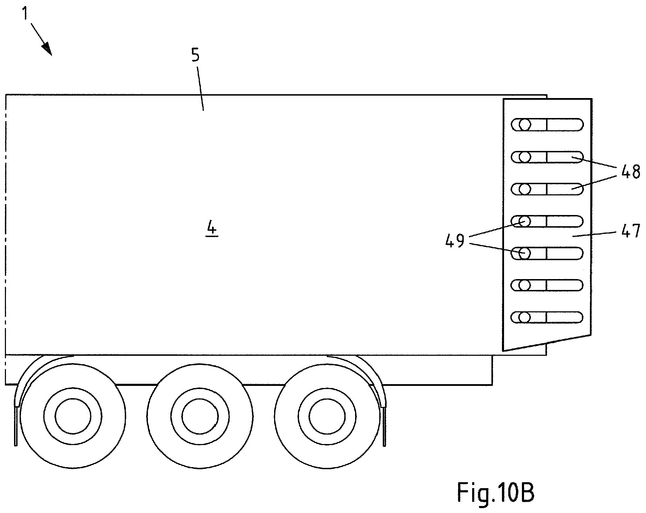

In den Fig. 10A-B ist eine Verbindung eines längsverschieblichen Spoilerelements 47 mit einer Seitenwand 4 dargestellt. Dazu weist das Spoilerelement 47 Langlöcher 48 auf, in die Nocken 49 der Seitenwandplane 5 eingreifen. Alternativ könnten die Nocken 49 aber auch an einer festen Seitenwand eines Kofferaufbaus vorgesehen sein. Grundsätzlich ist es auch denkbar, dass die Nocken am Spoilerelement und die Langlöcher an der Seitenwand vorgesehen sind, was jedoch in vielen Fällen weniger bevorzugt sein wird. Über die entsprechende Verbindung zwischen der Seitenwand 4 und dem Spoilerelement 47 kann das Spoilerelement 47 von der in der Fig. 10A dargestellten und eingeschobenen Ladestellung in die in der Fig. 10B dargestellte und gegenüber der Rückwand 17 teilweise nach hinten überstehende Fahrstellung und zurück verstellt werden. Eine entsprechende Verbindung über Langlöcher 48 und Nocken 49 kommt auch für dem Dach 2 zugeordnete Spoilerelemente 47 in Frage.

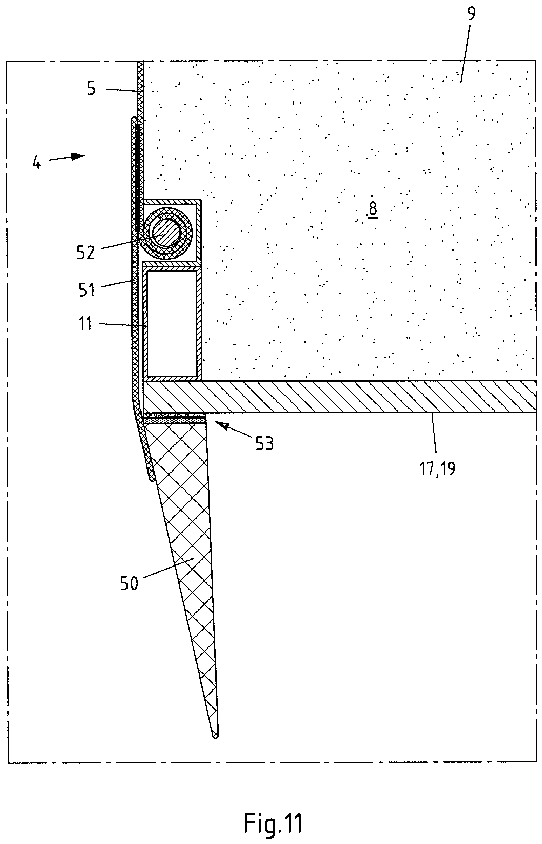

In der Fig. 11 ist ein Spoilerelement 50 aus einem stabilen Kunststoff oder dergleichen vorgesehen, das mit einem Stück bzw. Streifen Planenmaterial 51 verbunden, insbesondere verschweißt, ist. Zudem ist das Planenmaterial 51 mit der Seitenwandplane 5 an der zugehörigen Seitenwand 4 verbunden, insbesondere verschweißt. Das Planenmaterial 51 kann dabei den Scharnierabschnitt bilden, um das Spoilerelement 50 von der Fahrstellung in die Ladestellung zu verstellen. Die dargestellte und insoweit bevorzugte Seitenwandplane 5 ist zudem mit einem Planenspannrohr 52 mit der hinteren Eckrunge 11 verbunden, das dem Spannen der Seitenwandplane 5 dient. Grundsätzlich könnte die Seitenwandplane 5 auch nur über eine Kederleiste und eine korrespondierende Hakleiste formschlüssig in die hintere Eckrunge 11 eingehängt sein. Bei dargestellten und insoweit bevorzugten Aufbau 1 ist das Spoilerelement 50 zudem lösbar mit der Rückwand 17 verbunden und zwar beispielsweise über eine Klettverbindung 53.

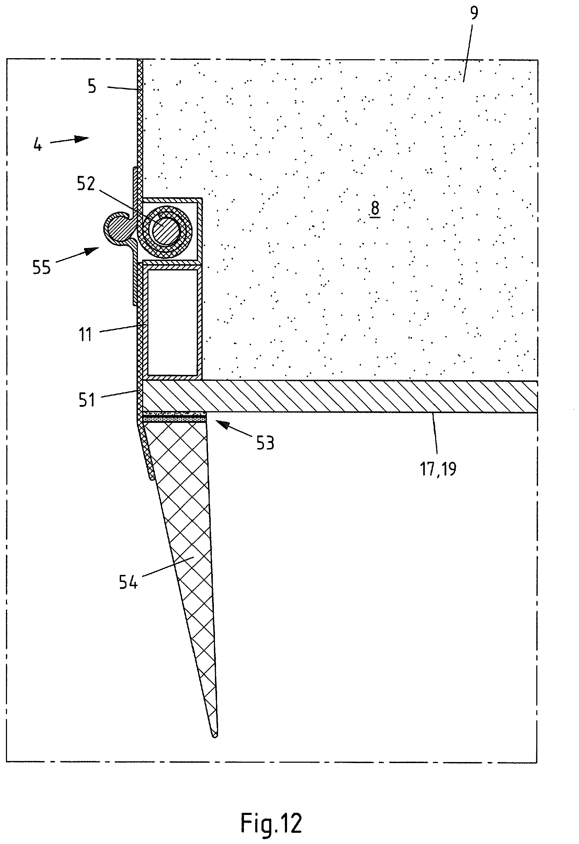

In der Fig. 12 ist ein alternatives Spoilerelement 54 dargestellt, das über eine formschlüssige Profilverbindung 55 mit der Seitenwandplane 5 verbunden ist. Die Profilverbindung 55 kann mit der Seitenwandplane 5 und/oder dem Spoilerelement 54 verschweißt sein. Es kommt aber auch eine Verbindung über ein Vernähen oder dergleichen in Frage. Ansonsten entsprechen die Seitenwand 4 und das Spoilerelement 54 im Wesentlichen dem Ausführungsbeispiel gemäß Fig. 11.

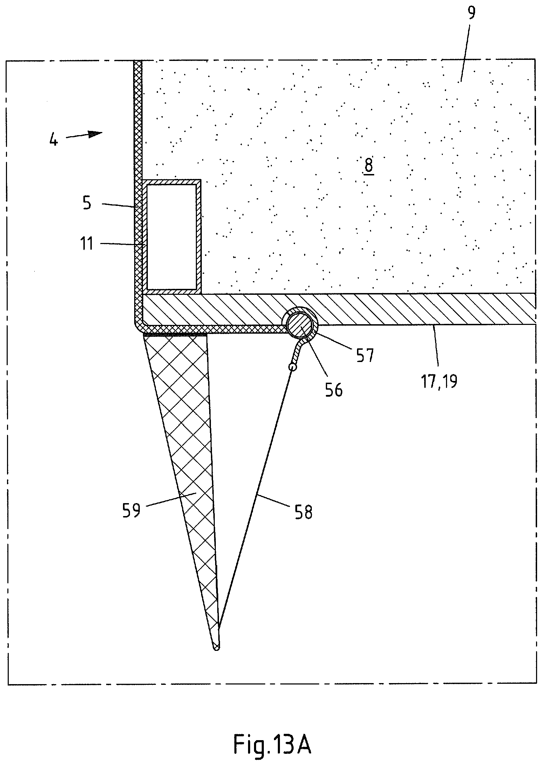

In den Fig. 13A-B ist ein Aufbau 1 mit einer Seitenwandplane 5 dargestellt, die in dem Ausführungsbeispiel der Fig. 13A teilweise um die hintere Eckrunge 11 herumgeführt und mit dem hinteren Ende der Seitenwandplane 5 an der Rückwand 17, insbesondere der zugeordneten Flügeltür 19, verbunden ist, und zwar insbesondere formschlüssig. Zu diesem Zweck kann beispielsweise eine Kederleiste 56 der Seitenwandplane 5 in einem korrespondierenden Halteprofil 57 an der Rückwand 17 bzw. der Flügeltür 19 gehalten sein. Zudem kann an der Seitenwandplane 5 bzw. an der Kederleiste 56 ein, insbesondere elastisches, Band 58 angebracht sein, das mit dem Spoilerelement 59 verbunden ist, um das Spoilerelement 59 zur Rückwand 17 und nach innen abzuspannen. Unabhängig von der Verwendung eines solchen Bands 58 ist das Spoilerelement 59 fest mit dem hinteren Ende der Seitenwandplane 5 verbunden, beispielsweise verschweißt, so dass das Spoilerelement 59 durch das Verbinden der Seitenwandplane 5 mit der Rückwand 17 bzw. durch das Schließen der zugeordneten Flügeltür 19 zwangsweise in die Fahrstellung bewegt wird.

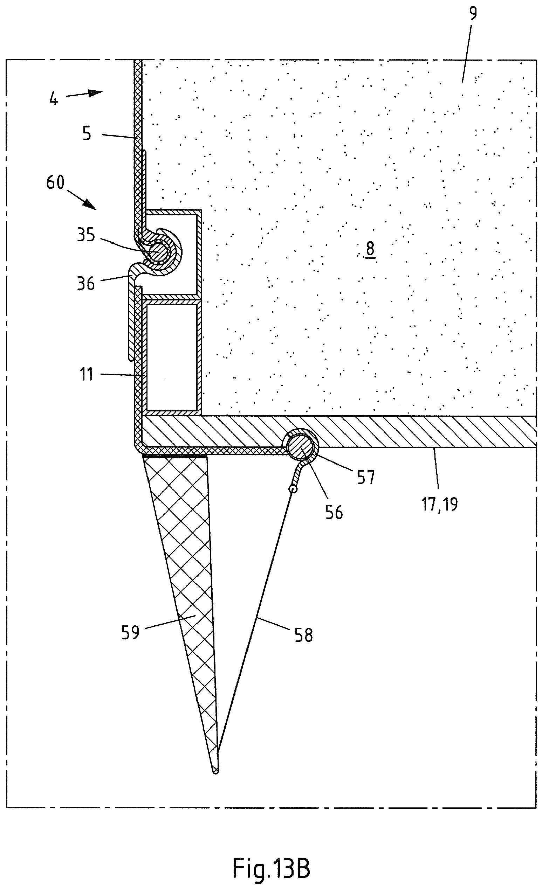

In der Fig. 13B ist eine Abwandlung des in der Fig. 13A dargestellten Details dargestellt, bei der die Seitenwandplane 5 wie in vielen Fällen üblich eine hintere Kederleiste 35 aufweist, welche formschlüssig in einer Kederaufnahme 36 des Spoilerlements 59 aufgenommen ist. Die Kederaufnahme 65 ist wiederum mit Planenmaterial verbunden, das dann teilweise um die hintere Eckrunge 11 herumgeführt und mit dem hinteren Ende der Seitenwandplane 5 an der Rückwand 17, insbesondere der zugeordneten Flügeltür 19, verbunden ist. Dabei ist es bevorzugt, wenn der die Kederleiste 35 und die Kederaufnahme 36 wenigstens teilweise in der Eckrunge aufgenommen sind.

### Bezugszeichenliste

- 1: Planenaufbau
- 2: Dach
- 3: Dachplane
- 4: Seitenwand
- 5: Seitenwandplane
- 6: Schiebeverdeck
- 7: Längsholm
- 8: Laderaum
- 9: Ladeboden
- 10,11: Eckrunge
- 12: Boden
- 13: Mittelrunge
- 14: Stirnwand
- 15: Planenspannrohr
- 16: Ratscheneinrichtung
- 17: Rückwand
- 18: Rückwandportal
- 19: Flügeltür
- 20: Querholm
- 21: Scharnier
- 22: Rückwandschürze
- 23,24: Spoilerelement
- 25,26: Scharnierabschnitt
- 27,28: Klettelement
- 29: Planentasche
- 30: Kunststoff
- 31,32: Klettelement
- 33: Haken
- 34: Band
- 35: Kederleiste
- 36: Hakprofil
- 38: Rungengrundkörper
- 39: Rungenschiebling
- 40: Spoilerelement
- 41: Düsenkanal
- 42: Düsenöffnung
- 43: Spoilerelement
- 44: Aufnahme
- 45: Schiebling
- 46: Hakenelement
- 47: Spoilerelement
- 48: Langloch
- 49: Nocken
- 50: Spoilerelement
- 51: Planenmaterial
- 52: Planenspannrohr
- 53: Klettverbindung
- 54: Spoilerelement
- 55: Profilverbindung
- 56: Kederleiste
- 57: Halteprofil
- 58: Band
- 59: Spoilerelement
- 60: Kederaufnahme
- 61: Strebe
- 62: Haltewinkel
- 63: Band

## Patentansprüche

1. Aufbau (1) eines Nutzfahrzeugs (N), insbesondere Lastkraftwagens, Anhängers oder Sattelaufliegers, mit einem Dach (2), gegenüberliegenden Seitenwänden (4) und einer Rückwand (17), wobei wenigstens ein Spoilerelement (23,24,40,43,47,50,54,59) zur Verbesserung der Aerodynamik des Aufbaus (1) vorgesehen ist, wobei das Spoilerelement von einer der Rückwand (17) zugeordneten und gegenüber der Rückwand (17) nach hinten vorstehenden Fahrstellung in eine einer Seitenwand (4) oder dem Dach (2) zugeordneten Ladestellung und zurück verstellbar ist,
**dadurch gekennzeichnet, dass**
das wenigstens eine Spoilerelement (23,24,40,43,47,50,54,59) sowohl in der Fahrstellung als auch in der Ladestellung an der Seitenwand (4) oder dem Dach unverlierbar festgelegt ist.

2. Aufbau nach Anspruch 1,
**dadurch gekennzeichnet, dass**
das wenigstens eine Spoilerelement (23,24,40,43,47,50,54,59) in der Fahrstellung lösbar, insbesondere formschlüssig, kraftschlüssig, über einen Klettverschluss und/oder magnetisch, mit der Rückwand (17) verbunden ist und/oder dass das wenigstens eine Spoilerelement (23,24,40,43,47,50,54,59) in der Ladestellung über eine zusätzliche, lösbare Verbindung, insbesondere formschlüssige Verbindung, kraftschlüssige Verbindung, über einen Klettverschluss (27,28) und/oder über eine magnetische Verbindung, mit der Seitenwand (4) oder dem Dach (2) verbunden ist.

3. Aufbau nach Anspruch 1 oder 2,
**dadurch gekennzeichnet, dass**
das wenigstens eine Spoilerelement (23,24,40,43,50,54,59) ein Scharnierabschnitt (25,26) zum Umklappen des wenigstens einen Spoilerelements (23,24,40,43,50,54,59) von der Fahrstellung in die Ladestellung und zurück aufweist und dass, vorzugsweise der Scharnierabschnitt (25,26) der Seitenwand (4) oder dem Dach (2) zugeordnet ist und dass, weiter vorzugsweise, der Scharnierabschnitt (25,26) an der Seitenwand (4) oder dem Dach (2) festgelegt ist.

4. Aufbau nach einem der Ansprüche 1 bis 3,
**dadurch gekennzeichnet, dass**
das wenigstens eine Spoilerelement (47), insbesondere über Langlöcher (48), in Längsrichtung des Aufbaus (1) gegenüber der Seitenwand (4) und der Rückwand (17) von der Fahrstellung in die Ladestellung und zurück verschiebbar vorgesehen ist.

5. Aufbau nach einem der Ansprüche 1 bis 4,
**dadurch gekennzeichnet, dass**
das wenigstens eine Spoilerelement (23,24,40,43,47,50,54,59) mit der Seitenwand (4) oder dem Dach (2) durch Verschweißen, insbesondere von Planenmaterial (51), einen Reißverschluss, eine Kederleiste (35), durch Schrauben und/oder Nieten verbunden ist und/oder dass das wenigstens eine Spoilerelement (23,24,40,43,47,50,54,59) in der Fahrstellung zur Stabilisierung der Fahrstellung durch wenigstens ein Band (34,58) gegenüber der Rückwand (17) abgespannt ist.

6. Aufbau nach einem der Ansprüche 1 bis 5,
**dadurch gekennzeichnet, dass**
der Aufbau (1) als Planenaufbau oder als Kofferaufbau ausgebildet ist und/oder dass an der wenigstens einen Seitenwand (4) eine Seitenwandplane (5), insbesondere eine zum Öffnen und zum Verschließen des Aufbaus (1) in Längsrichtung verschiebbare Seitenwandplane (5), vorgesehen ist und/oder dass an dem Dach (2) eine Dachplane (3), insbesondere eine mit einem zum Öffnen und zum Verschließen des Aufbaus (1) in Längsrichtung verschiebbaren Schiebverdeck (6) verbundene Dachplane (3), vorgesehen ist.

7. Aufbau nach einem der Ansprüche 1 bis 6,
**dadurch gekennzeichnet, dass**
das wenigstens eine Spoilerelement (43) wenigstens einen Schiebling (45) aufweist, dass die wenigstens eine Seitenwand (4) und/oder das Dach (2) wenigstens eine Aufnahme (44) zur Aufnahme des wenigstens einen Schieblings (45) zum Verbinden des wenigstens einen Spoilerelements (43) mit der Seitenwand (4) und/oder dem Dach (2) aufweist, und dass, vorzugsweise, die wenigstens eine Aufnahme (44) als Planentasche der Seitenwandplane (5) und/oder als Planentasche der wenigstens einen Dachplane (3) ausgebildet ist.

8. Aufbau nach einem der Ansprüche 1 bis 7,
**dadurch gekennzeichnet, dass**
das wenigstens eine Spoilerelement (23,24) als aus einem Planenmaterial gefertigte und mit einem Füllmaterial, insbesondere aus einem geschäumten Kunststoff 30, gefüllte Planentasche (29) ausgebildet ist und/oder das wenigstens eine Spoilerelement (23) als aus einem Planenmaterial gerfertigte Planentasche zum Aufblasen durch den Fahrtwind ausgebildet ist und/oder dass das wenigstens eine Spoilerelement (40,43,47,50,54,59) aus einem Kunststoff, insbesondere glasfaserverstärktem Kunststoff, gebildet ist.

9. Aufbau nach einem der Ansprüche 6 bis 8,
**dadurch gekennzeichnet, dass**
wenigstens eine Seitenwandplane (5) in der Fahrstellung mit dem hinteren Ende an der rückwärtigen Seite der Rückwand (17), insbesondere einer Flügeltür, festgelegt, insbesondere formschlüssig an einem Verbindungsmittel der Rückwand (17) gehalten, ist und dass, vorzugsweise, das wenigstens eine Spoilerelement (23,24,54) über wenigstens ein Band (34,58) gegenüber der Rückwand (17), an der Flügeltür (19), am hinteren Ende der Seitenwandplane (5) und/oder an dem Verbindungsmittel der Rückwand (17) abgespannt ist.

10. Aufbau nach einem der Ansprüche 6 bis 9,
**dadurch gekennzeichnet, dass**
das wenigstens eine Spoilerelement (23,24,40,43,47,50,54,59) zusammen mit der Seitenwandplane (5) und/oder der Dachplane (3) zum Öffnen und/oder zum Verschließen des Aufbaus (1) in Längsrichtung des Planenaufbaus von einer geschlossenen Stellung der Seitenwandplane (5) und/oder Dachplane (3) in eine geöffnete Stellung der Seitenwandplane (5) und/oder Dachplane (3) und zurück verschiebbar ist.

11. Aufbau nach einem der Ansprüche 1 bis 10,
**dadurch gekennzeichnet, dass**
das wenigstens eine Spoilerelement (40) wenigstens einen Düsenkanal (41) zum Durchströmen mit Fahrtwind aufweist und dass der wenigstens eine Düsenkanal (41) am rückwärtigen Ende des wenigstens einen Spoilerelements (40) wenigstens eine Düsenöffnung (42) zum Ausströmen des den wenigstens einen Düsenkanal (41) passierenden Fahrtwinds nach hinten aufweist.

12. Aufbau nach einem der Ansprüche 1 bis 11,
**dadurch gekennzeichnet, dass**
das wenigstens eine Spoilerelement bei geschlossener Rückwand (17), insbesondere geschlossener Flügeltür (19), von der Fahrstellung in die Ladestellung und zurück verstellbar ist und/oder dass das wenigstens eine Spoilerelement (23,24,40,43,47,50,54,59) in der Ladestellung gegenüber der Seitenwand (4) zur Seite oder gegenüber dem Dach (2) nach oben vorsteht und/oder dass das wenigstens eine Spoilerelement in der Ladestellung nicht gegenüber der Rückwand (17) nach hinten vorsteht.

13. Aufbau nach einem der Ansprüche 1 bis 12,
**dadurch gekennzeichnet, dass**
das Dach (2) rückwandseitig von einer oberen, insbesondere obersten, Fahrposition in eine untere, insbesondere unterste, Fahrposition und zurück verstellbar ausgebildet ist und dass, vorzugsweise, sich in der unteren, insbesondere untersten, Fahrposition des Dachs (2) das wenigstens eine Spoilerelement (23) in der Fahrstellung wenigstens im Wesentlichen über die gesamte Höhe der Rückwand (17) erstreckt.

14. Aufbau nach Anspruch 13,
**dadurch gekennzeichnet, dass**
das Dach (2) rückwandseitig von zwei höhenverstellbaren Eckrungen (11) getragen wird, dass, vorzugsweise, die Eckrungen (11) einen mit dem Boden (12) des Aufbaus (1) fest verbundenen Rungengrundkörper (38) und einen fest mit dem Dach (2) verbundenen sowie gegenüber dem Rungengrundkörper (38) wenigstens teilweise ausziehbaren und wieder einschiebbaren Rungenschiebling (39) aufweisen und dass, weiter vorzugswiese, die hinteren Eckrungen (11) zum, insbesondere formschlüssigen, Festlegen der Rungenschieblinge (39) gegenüber den Rungengrundkörpern (38) in unterschiedlichen Höhen ausgebildet sind.
